# DEMANDE DE BREVET EUROPEEN

(11) **EP 0 933 911 A1**
(43) Date de publication de la demande: **04.08.1999**
(21) Numéro de dépôt: 99200209.7
(22) Date de dépôt: 26.01.1999
(51) Int. Cl.: H04M 1/72, G06F 1/24

(54) **Equipement doté de moyens de mémorisation de la mise en marche**

(30) Priorité: 03.02.1998 FR 9801229
(71) Demandeur: Koninklijke Philips Electronics N.V., 5621 BA Eindhoven (NL)
(72) Inventeur: Fouré, Patrick, 75008 Paris (FR)
(74) Mandataire: Chaffraix, Jean

(57) **Abrégé**

L'invention concerne un équipement (1, 21) à microprocesseur (9, 26) doté d'une touche de mise en marche qui produit un signal de mise marche lorsqu'elle est activée.

Lorsque le microprocesseur de l'équipement est en phase d'initialisation, il n'est pas opérationnel. Le signal de mise en marche produit par l'activation de la touche de mise en marche est alors mémorisé par un circuit de mémorisation. LE microprocesseur vient lire ce signal mémorisé lorsqu'il a terminé sa phase d'initialisation.

Application : téléphonie et bureautique mobiles.

## Description

L'invention concerne un équipement à microprocesseur doté d'une touche de mise en marche destinée à fournir un signal de mise en marche.

L'invention concerne également un ensemble constitué d'un premier et d'un second équipement dotés de moyens d'interconnexion, ledit premier équipement étant doté d'un microprocesseur et d'une touche de mise en marche destinée à fournir un signal de mise en marche, et ledit second équipement étant doté d'un module d'alimentation.

L'invention concerne enfin un procédé de mise en marche d'un équipement à microprocesseur doté d'une touche de mise en marche destinée à fournir un signal de mise en marche.

L'invention trouve des applications intéressantes notamment dans le domaine de la téléphonie et de la bureautique mobiles.

Le brevet américain n° 5,438,695 délivré le 01.08.1995 décrit un équipement qui comporte notamment un microprocesseur et une touche de mise en marche qui peut être dans un état actif ou inactif. Dans l'état actif cette touche de mise en marche permet de fournir au microprocesseur un signal de mise en marche. Le microprocesseur stocke ce signal de mise en marche dans l'une de ses mémoires.

Le problème qui se pose est le suivant : pour pouvoir stocker le signal de mise en marche, le microprocesseur doit être opérationnel. Or lorsqu'on connecte l'équipement à un module d'alimentation pour alimenter le microprocesseur, celui-ci n'est opérationnel qu'après une phase d'initialisation qui dure plusieurs secondes. Si pendant ce temps d'initialisation l'utilisateur tente de mettre en marche l'équipement en appuyant sur la touche de mise en marche, cette opération demeure sans effet. Ceci est particulièrement inconfortable pour l'utilisateur.

L'invention a notamment pour but de remédier à cet inconvénient. Pour cela un équipement selon l'invention et tel que décrit dans le paragraphe introductif est caractérisé en ce qu'il comporte un circuit de mémorisation pour mémoriser le signal de mise en marche et pour le fournir au microprocesseur.

De même, un ensemble selon l'invention et tel que décrit dans le paragraphe introductif, constitué d'un premier et d'un second équipement, est caractérisé en ce que, lorsque lesdits équipements sont interconnectés ledit premier équipement est alimenté par le module d'alimentation dudit second équipement, et en ce que ledit premier équipement comporte un circuit de mémorisation pour mémoriser le signal de mise en marche et pour le fournir au microprocesseur..

Enfin, un procédé selon l'invention, et tel que décrit dans le paragraphe introductif, de mise en marche d'un équipement à microprocesseur, est caractérisé en ce qu'il comporte une étape de mémorisation pour mémoriser ledit signal de mise en marche, et une étape de lecture pour fournir le signal mémorisé au microprocesseur.

L'invention est particulièrement avantageuse pour les équipements qui sont dotés d'un module d'alimentation externe connecté à l'équipement avant chaque utilisation dudit équipement.

L'invention sera mieux comprise et d'autres détails apparaîtront dans la description qui va suivre en référence aux figures annexées qui sont données à titre d'exemples non limitatifs et dans lesquelles :
- la figure 1 représente un équipement selon l'invention,
- la figure 2 représente un ensemble selon l'invention constitué d'un premier et d'un second équipement,
- la figure 3 est un schéma représentant un mode de réalisation d'un circuit de mémorisation selon l'invention,
- la figure 4 est un exemple de procédé selon l'invention de mise en marche d'un équipement à microprocesseur.

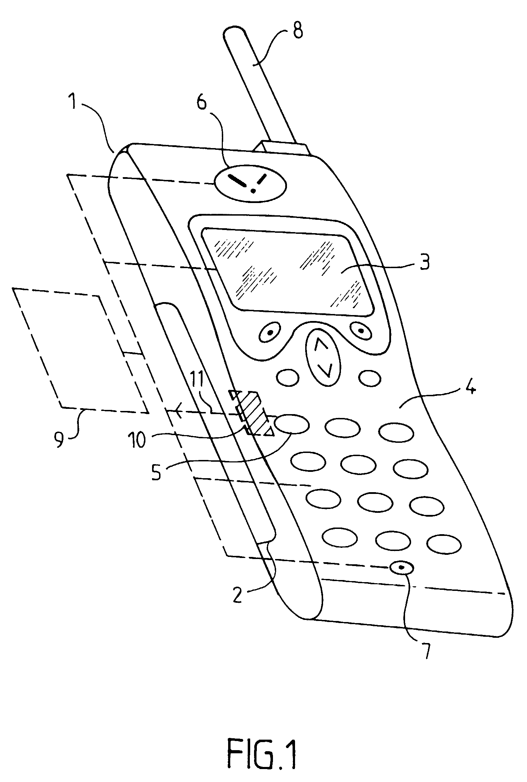

Sur la figure 1, on a représenté un équipement 1 selon l'invention qui est un téléphone portable. Ce téléphone portable comporte un module d'alimentation d'alimentation 2, susceptible d'être déconnecté. un écran 3, un clavier 4 qui comporte notamment une touche de mise en marche 5, un écouteur 6, un microphone 7, une antenne 8, et un ensemble à microprocesseur 9 qui gère le fonctionnement du téléphone. Un circuit 10 de mémorisation est connecté en parallèle avec la touche de mise en marche 5. Il a pour fonction de mémoriser un signal de mise en marche 11 produit par un appui sur la touche de mise en marche 5, et de fournir ce signal de mise en marche 11 au microprocesseur 9.

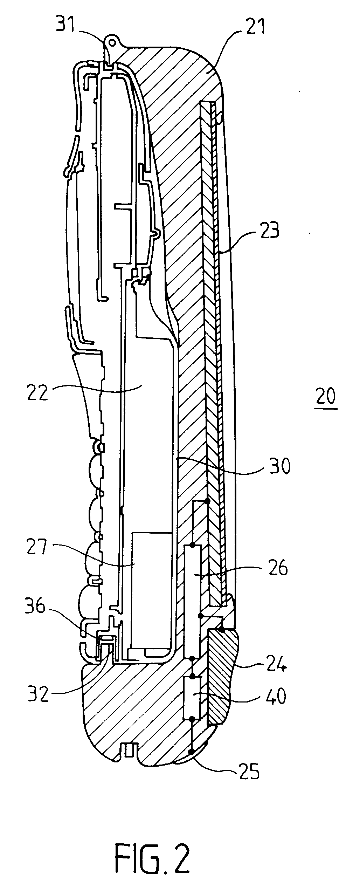

Sur la figure 2, on a représenté un ensemble 20 constitué d'un premier et d'un second équipement. Dans cet exemple de réalisation, le premier équipement est un organiseur 21, et le second équipement est un téléphone portable 22.

A titre d'exemple l'organiseur 21 comporte un écran d'affichage 23 permettant à l'utilisateur d'entrer des informations en touchant l'écran, ainsi qu'un organe de pointage 24, par exemple du genre «track-ball», une touche de mise en marche 25, et un ensemble à microprocesseur 26 qui gère le fonctionnement de l'organiseur. Le téléphone 22 est un téléphone portable classique doté d'un module d'alimentation 27 qui est par exemple constitué par une batterie.

L'organiseur 21 et le téléphone 22 sont dotés de moyens mécaniques et électriques d'interconnexion. D'un point de vue mécanique, l'organiseur 21 est doté d'un logement 30 destiné à loger le téléphone 22, et de moyens d'encliquetage 31 connus en soi, permettant de maintenir le téléphone 22 en position dans le logement 30. D'un point de vue électrique, l'organiseur 21 est muni d'un connecteur électrique 32 destiné à coopérer avec un connecteur 36 du téléphone, de façon à s'alimenter par la batterie 27 de ce dernier.

Conformément à l'invention, un circuit de mémorisation 40 est connecté en parallèle avec la touche 25 de mise en marche de l'organiseur. Ce circuit de mémorisation 40 a pour fonction de mémoriser un signal de mise en marche 41 produit par un appui sur la touche 25, et de fournir ce signal de mise en marche 41 au microprocesseur 26.

Lorsque l'utilisateur connecte l'organiseur au téléphone, le microprocesseur 26 est alimenté et il s'initialise. La durée de cette initialisation est de plusieurs secondes. L'utilisateur peut appuyer sur la touche de mise en marche 25 de l'organiseur 21 pendant cette initialisation. Un tel appui produit un signal demise en marche 41 qui est mémorisé par le circuit de mémorisation 40. afin d'être pris en compte par le microprocesseur dès la fin de l'initialisation.

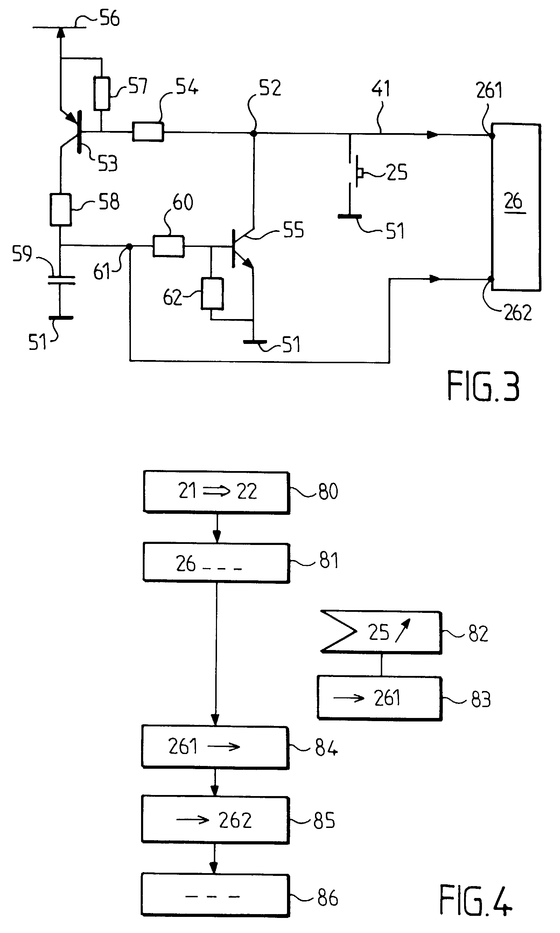

Sur la figure 3 on a représenté schématiquement un exemple de réalisation du circuit de mémorisation 40. Ce schéma est directement applicable au circuit de mémorisation 10 de la figure 1.

La touche 25 est connectée entre une masse 51 et un point 52.Ce point 52 est relié :
- à un premier port 261 de l'ensemble à microprocesseur 26.
- à la base d'un transistor 53 de type PNP par l'intermédiaire d'une résistance 54,
- au collecteur d'un transistor 55 de type NPN.

L'émetteur du transistor 53 est relié à une borne 56 qui délivre une tension de référence. Sa base est reliée à cette borne 56 par l'intermédiaire d'une résistance 57. Et son collecteur est relié :
- par l'intermédiaire d'une résistance 58, à une première borne d'une capacité 59 dont la seconde borne est reliée à la masse 51,
- à la base du transistor 55 par l'intermédiaire de la résistance 58 et d'une résistance 60,
- à une entrée 61 de réinitialisation des moyens de mémorisation 40.

L'émetteur du transistor 55 est relié à la masse 51 par l'intermédiaire d'une résistance 62.

Lorsque l'utilisateur appuie sur la touche 25, le transistor 53 devient passant et charge la capacité 59. La tension présente sur cette capacité fait conduire le transistor 55. Le collecteur du transistor 55 se trouve alors à la masse. Lorsque l'utilisateur relâche la touche, le transistor 53 est toujours conducteur puisque le collecteur du transistor 55 est à la masse. L'information envoyée au microprocesseur est ainsi maintenue à «zéro». Cette information constitue le signal de mise en marche 41.

L'entrée 61 de réinitialisation est reliée à un second port 262 de l'ensemble à microprocesseur. Elle est utilisée pour effacer l'information mémorisée après qu'elle a été lue par le microprocesseur, de telle sorte que la touche 25 soit de nouveau opérationnelle (détection et mémorisation d'un appui).

Sur la figure 4. on a représenté un procédé de mise en marche selon l'invention. A la case 80, l'équipement est connecté à son module d'alimentation. A la case 81, le microprocesseur commence son initialisation. Lorsque l'utilisateur appui sur la touche de mise en marche (case 82), l'équipement mémorise le signal de mise en marche produit par cet appui (case 83). Lorsque l'initialisation du processeur est terminée celui-ci lit l'information présente sur son premier port 261 (case 84). A la case 85, il écrit l'information «zéro» sur son deuxième port 262 pour réinitialiser les moyens de mémorisation, puis à la case 86 il poursuit son fonctionnement normal.

L'invention n'est pas limitée aux modes de réalisation qui viennent d'être décrits à titre d'exemple. Elle est applicable à tout équipement à microprocesseur alimenté par un module d'alimentation qui est susceptible d'être déconnecté. Il peut s'agir d'une batterie amovible ou d'un module d'alimentation externe qui est par exemple constitué par la batterie d'un autre équipement. Par exemple, l'invention est applicable à des équipements destinés à être branchés sur une voiture par l'intermédiaire d'une prise allume cigare, pour être alimentés par la batterie de la voiture.

## Revendications

1. Equipement (1, 21) à microprocesseur (9, 26) doté d'une touche de mise en marche (5, 25) destinée à fournir un signal de mise en marche (11, 41), caractérisé en ce qu'il comporte un circuit de mémorisation (10, 40) pour mémoriser le signal de mise en marche et pour le fournir au microprocesseur.

2. Ensemble (20) constitué d'un premier (21) et d'un second (22) équipement dotés de moyens d'interconnexion (30, 31, 32, 36), ledit premier équipement étant doté d'un microprocesseur (26) et d'une touche de mise en marche (25) destinée à fournir un signal de mise en marche (41), et ledit second équipement étant doté d'un module d'alimentation (27), caractérisé en ce que lorsque lesdits équipements sont interconnectés, ledit premier équipement est alimenté par le module d'alimentation dudit second équipement, et en ce que ledit premier équipement comporte un circuit (40) de mémorisation pour mémoriser le signal de mise en marche et pour le fournir au microprocesseur.

3. Procédé de mise en marche d'un équipement à microprocesseur doté d'une touche de mise en marche destinée à fournir un signal de mise en marche, caractérisé en ce qu'il comporte une étape (83) de mémorisation pour mémoriser ledit signal de mise en marche, et une étape de lecture (84) pour fournir le signal mémorisé au microprocesseur.
